# EUROPEAN PATENT SPECIFICATION

(11) **EP 4 071 666 B1**
(45) Date of publication and mention of the grant of the patent: **30.10.2024**
(21) Application number: 20931895.5
(22) Date of filing: 28.08.2020
(51) Int. Cl.: G06K 17/00, B65G 1/02, G06K 7/10, G06Q 10/08, B65G 1/137

(54) **RFID-BASED INTELLIGENT MEDICINE BOTTLE CONTROL METHOD AND APPARATUS, AND CRASH CART**
INTELLIGENTES VERFAHREN UND VORRICHTUNG ZUR STEUERUNG EINER MEDIKAMENTENFLASCHE AUF RFID-BASIS UND NOTFALLWAGEN
PROCÉDÉ ET APPAREIL DE COMMANDE DE FLACON À MÉDICAMENT INTELLIGENT À BASE D'IDENTIFICATION PAR RADIOFRÉQUENCE (RFID) ET CHARIOT DE COLLISION

(30) Priority: 24.04.2020 CN 202010332117; 30.04.2020 CN 202010363147; 30.04.2020 CN 202010363134
(43) Date of publication of application: 12.10.2022
(73) Proprietor: Shenzhen Lachesis Mobile Medical Technology Co., Ltd, Shenzhen, Guangdong 518000 (CN)
(72) Inventor: WANG, Shuai, Shenzhen, Guangdong 518000 (CN); LIU, Jigang, Shenzhen, Guangdong 518000 (CN); GU, Xiaobin, Shenzhen, Guangdong 518000 (CN); LUO, Guoshu, Shenzhen, Guangdong 518000 (CN)
(74) Representative: Herrero & Asociados, S.L.
(86) International application number: PCT/CN2020/112160
(87) International publication number: WO 2021/212716

(56) References cited:
- EP-A1- 2 249 290
- EP-A1- 3 477 268
- CN-A- 103 559 606
- CN-A- 105 416 960
- CN-A- 105 574 688
- CN-A- 111 401 497
- CN-A- 111 401 497
- CN-A- 111 401 498
- CN-U- 208 463 313
- JP-A- 2011 011 841
- US-A1- 2007 012 603

## Description

### 1. Cross-Reference to Related Application

This application claims the benefit of priority from, Chinese Patent Application No. 202010363134.5 entitled "INFRARED AND RFID COMBINED INTELLIGNET MEDICINE BOTTLE POSITIONING MEHTOD AND DEVICE" and filed on April 30, 2020, Chinese Patent Application No. 202010363147.2 entitled "NON-CONTACT AND NON-ALIGNMENT TYPE MEDICINE BOTTLE IDENTIFICATION METHOD AND DEVICE" and filed on April 30, 2020; Chinese Patent Application No. 202010332117.5 entitled "RFID MEDICINE BOTTLE MANAGEMENT DEVCIE SUITABLE FOR DIFFERENT MEDICINE BOTTLE HEIGHTS" and filed on April 30, 2020.

### BACKGROUND

### 2. Technical Field

The present invention generally relates to the technical field of medicine bottle management and control technologies, and especially relates to a RFID-based intelligent medicine bottle control apparatus.

### 3. Description of Related Art

In a medical system, because the amount of medicine bottles is huge and related to people's health, accurate batch management is required. At present, the medicine bottles are manually managed and combined with a database to manage a storage, inventory, and delivery of the medicine bottles.

However, a conventional medicine bottle management method can't automatically input medicine bottle information of the medicine bottle and a storage position of the medicine bottle into a database. It is necessary to manually check the storage position of the medicine bottle after the medicine bottle is put into a warehouse, which is very time-consuming, inefficient and easy to make mistakes in the processing of large quantities of medicine bottles.

Therefore, the conventional technology needs to be improved. A first related document CN111401497 A discloses an infrared and RFID combined medicine intelligent positioning method and a device, wherein the method includes the following steps: placing a medicine which is pasted with a RFID electronic tag and can reflect infrared rays into a medicine rack; moving a movable workbench provided with an infrared sensor and an RFID reader-writer along a medicine rack, and detecting and recording the position of the movable workbench; when the mobile workbench reaches one medicine storage position, the infrared sensor detects whether the position is provided with a medicine according to the existence of an infrared ray external reflection signal, if so, the RFID reader-writer reads the coding information and the medicine information in the RFID electronic tag of the medicine, and the coding information, the medicine information and the position of the medicine storage position are bound and stored in a database in a corresponding relationship; and repeating the previous step until the moving workbench finishes walking each medicine storage position on the medicine rack. The intelligent degree in the drug storage management process is improved, the drug information and the stored position information can be automatically input, and the working efficiency is improved. A second related document EP 2249290 A1, which comprises the features mentioned in the preamble of claim 1, discloses an automated system which is able to take inventory of products stored in high rise racks and immediately provide the inventory information to an information system for immediate processing and which makes use of remote electronic identification means for each product, box, etc. and each row of a correspondent rack, thus allowing the system to read great amounts of information at once. A third related document JP 2011011841 A discloses an inspection method for improving the rate of reading radio IC tags while preventing the leakage of electric waves without providing special installations and increasing workloads on workers. The inspection method includes: detecting the existence or not of articles coming near the entrance of a gate, opening the entrance door of the gate when detecting the existence of the articles coming near the entrance of the gate, detecting whether all of the articles enter into the gate or not, closing the entrance door when detecting that all of the articles enter into the gate, transmitting electric waves from an antenna installed in the gate toward the articles after fully closing the entrance door, reading management information registered on the radio IC tags while using the antenna for receiving the electric waves transmitted from the radio IC tags pasted to inspected objects out of the articles, and stopping the transmission of the electric waves after predetermined conditions are established. A fourth related document EP 3477268 A1 discloses a radiation thermometer is provided which achieves highly accurate temperature measurement even when subjected to large temperature variations in ambient environment by preventing entry, into an infrared sensor, of infrared rays emitted from a barrel and components disposed inside the barrel, and by reducing a temperature measurement error due to self-infrared rays. The radiation thermometer includes a barrel, an infrared sensor, a first aperture, an infrared absorption structure, and a reflection structure. The barrel includes an infrared inlet port formed on a front end thereof. The infrared sensor is disposed on the base end side so as to be opposite to the infrared inlet port in the barrel. The first aperture is disposed so as to divide between the infrared inlet port and the infrared sensor in the barrel. The infrared absorption structure is disposed on at least a part of an inner end surface on the base end side in the barrel or at least a part of an outer surface of the infrared sensor. The reflection structure is disposed on at least a part of an inner peripheral surface on the base end side than the first aperture in the barrel or at least a part of the first aperture which is located toward the infrared sensor.

### SUMMARY

The technical problems to be solved: in view of the shortcomings of the related art, the present invention provides a RFID-based intelligent medicine bottle control apparatus which can improve the intellectualization degree in a storage and management process of the medicine bottle, automatically input the medicine bottle information and the position information that has been stored, and improve the work efficiency thereof.

In order to achieve the above purpose, the technical solution adopted for solving technical problems of the present invention is:
A RFID-based intelligent medicine bottle control apparatus according to claim 1.

Preferred embodiments are defined in the dependent claims.

Beneficial effects: the RFID-based intelligent medicine bottle control apparatus of the present invention can sequentially obtain the medicine bottle information of each of the plurality of medicine bottle storage positions on the medicine bottle storage rack by combining the infrared sensor and the RFID read and write device, and record the position information of the medicine bottle storage position at the same. When the medicine bottle exists in the medicine bottle storage position, the medicine bottle information and the position information on the medicine bottle storage position are bound and stored in the database, so that the medicine bottle information and the position information can be bound and entered automatically and quickly, which can improve work efficiency of workers and facilitate a subsequent positioning and extraction of the medicine bottle.

### BRIEF DESCRIPTION OF THE DRAWINGS

FIG. 1 is a schematic flowchart of a RFID-based intelligent medicine bottle control method not being part of the present invention.
FIG. 2 is a schematic flowchart of a RFID-based intelligent medicine bottle control method not being part of the present invention.
FIG. 3 is a schematic view of a RFID-based intelligent medicine bottle control apparatus in accordance with a first embodiment of the present invention.
FIG. 4 is a schematic view of a medicine bottle storage rack and a movable worktable of the RFID-based intelligent medicine bottle control apparatus of FIG. 3.
FIG. 5 is a schematic view of a medicine bottle provided with an RFID electronic label and an RFID read and write device of the RFID-based intelligent medicine bottle control apparatus of FIG. 3.
FIG. 6 is a schematic front view of the medicine bottle storage rack of FIG. 4.
FIG. 7 is a schematic view of the medicine bottle storage rack of the RFID-based intelligent medicine bottle control apparatus in accordance with another embodiment of the present invention.
FIG. 8 is a schematic cross-sectional view of FIG. 7.
FIG. 9 is an enlarged schematic view of circle A of FIG. 7.

The element labels according to the exemplary embodiment of the present invention shown as below:
100 medicine bottle storage rack, 101 medicine bottle storage position, 1011 gap, 200 movable worktable, 201 infrared sensor, 202 RFID read and write device, 300 driving and position detection unit, 400 control host, 401 RFID read and write module, 402 RFID ceramic antenna, 500 database, 600 display, 700 medicine bottle, 701 RFID electronic label, 1 base, 2 linear displacement module, 21 frame,22 sliding rail, 23 sliding block, 24 driving device, 3 shielding cover, 4 RFID main antenna, 5 main control circuit board, 6 medication box, 61 medicine bottle receiving hole, 7 RFID secondary antenna.

### DETAILED DESCRIPTION

In order to make the above purposes, features and advantages of the present invention more obvious and thorough understand of the subject matter presented herein, the following is a further detailed description of the present invention in combination with the accompanying drawings and the specific implementation embodiments. It should be understood that specific embodiments described herein are only used to explain the present invention, rather than limiting the protection scope of the present invention.

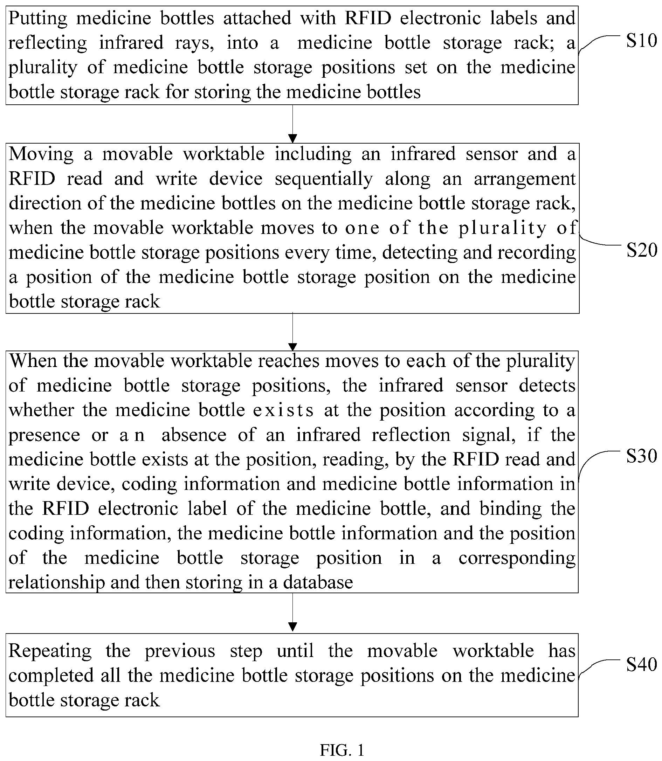

Referring to FIG. 1, a flowchart of a RFID-based (radio frequency identification)intelligent medicine bottle control method, not being part of the present invention, is provided, the RFID-based intelligent medicine bottle control method includes the following steps:
step S10, putting medicine bottles attached with RFID electronic labels and reflecting infrared rays, into a medicine bottle storage rack; a plurality of medicine bottle storage positions set on the medicine bottle storage rack for storing the medicine bottles.

Coding information of the present embodiment is pre-stored in the RFID electronic label. The coding information is a unique identification code of the RFID electronic label, at the same time, corresponding medicine bottle information of the medicine bottle, such as a name, a specification, a batch number, a production date, an expiry date, etc., is pre-written in the RFID electronic label. A writing mode is written by a handheld RFID read and write device. The prewriting of the medicine bottle information in the RFID electronic label can be completed by medicine bottle suppliers in advance, or by a medicine using unit such as a hospital when the medicine bottle is warehoused. An appearance or a package of the medicine bottle should be able to reflect infrared rays, and black can absorb the infrared rays, in this way, the appearance or package of the medicine bottle can't be black.

Step S20, moving a movable worktable including an infrared sensor and a RFID read and write device sequentially along an arrangement direction of the medicine bottles on the medicine bottle storage rack, when the movable worktable moves to one of the plurality of medicine bottle storage positions every time, detecting and recording a position of the medicine bottle storage position on the medicine bottle storage rack.

A control unit assembly can be connected to the movable worktable to control the movable worktable to move. The control unit assembly can include a control host, a driving device and a position detection device. The driving device can adopt a structure such as a motor plus a transmission part and a walking wheel, or a structure such as a motor plus a transmission part and a guiding rail. The position detection device can be an encoder or the like. Of course, the driving device and the position detection device can be an integral structure, such as a stepping motor and a servo motor, etc, in this way, a displacement of the movable worktable can be calculated by the control host to obtain a real-time position of the movable worktable, and according to the real-time position, which medicine bottle storage position that the movable worktable is in the medicine bottle storage rack can be obtained, and the position can be recorded.

If there are a plurality of medicine bottle storage racks, a first one is numbered J1, a second one is numbered J2......; a position number of the first medicine bottle storage position on the first medicine bottle storage rack is numbered J1L1, and a position number of the second medicine bottle storage position on the first medicine bottle storage rack is numbered J1L2, a distance between J1L1 and J1L2 is 0.2m, an end face of the medicine bottle storage rack is taken as an initial zero position, and a distance between the initial zero position and J1L1 is also 0.2m. When the movable worktable moves, a displacement fed back by the position detection device is 0.2m, 0.3m, 0.4m..., then the control host will determine that when the displacement is 0.2m, the movable worktable is in the first medicine bottle storage position and record a current position; when the control host determines that the displacement is 0.4m, the movable worktable is in the second medicine bottle storage position and record the current position, and so on.

Step S30, When the movable worktable reaches each of the plurality of medicine bottle storage positions, the infrared sensor detects whether the medicine bottle exists at the position according to a presence or an absence of an infrared reflection signal, if the medicine bottle exists at the position, reading, by the RFID read and write device, coding information and medicine bottle information in the RFID electronic label of the medicine bottle, and binding the coding information, the medicine bottle information and the position of the medicine bottle storage position in a corresponding relationship and then storing in the database.

In an implementation of the present invention, when the movable worktable reaches the medicine bottle storage position, for example, the displacement is one of 0.2m, 0.4m, 0.6m..., the infrared sensor on the movable worktable emits infrared rays to the medicine bottle storage position, and then determines whether the medicine bottle exists on the medicine bottle storage position according to whether the infrared sensor receives the infrared rays emitted by itself, if the medicine bottle exists on the medicine bottle storage position, opening the RFID read and write device on the movable worktable to read the RFID electronic label on the medicine bottle, so as to obtain the coding information of the label and the medicine bottle information of the medicine bottle, binding position information of the medicine bottle storage position, such as J1L2, with the coding information and the medicine bottle information in a corresponding relationship, and then storing in the database, so that the workers can quickly query and locate the medicine bottle.

In an embodiment of the present invention, the infrared sensor is a reflective infrared sensor, when the reflective infrared sensor receives the infrared reflection signal, it is determined that the medicine bottle exists at the position; and when the reflective infrared sensor does not receive the infrared reflection signal, it is determined that no medicine bottle exists at the position, and information of the position where there is no medicine bottle is stored in the database.

The reflective infrared sensor is equipped with a transmitting head and a receiving head.The transmitting head is configured to transmit infrared rays to the medicine bottle storage position of the medicine bottle storage rack, if the medicine bottle exists in the medicine bottle storage position, the medicine bottle will reflect the infrared rays that has just emitted, to the receiving head of the reflective infrared sensor for being received. The control host determines that there is medicine, and then the RFID read and write device is turned on to read the RFID electronic label on the medicine bottle. If the medicine bottle does not exist in the medicine bottle storage position, the infrared rays emitted by the infrared sensor is not be reflected, the receiving head of the infrared sensor will not receive an infrared signal, and the control host determines that there is no medicine. The embodiment of the present invention stores information there is no medicine bottle at the position into the database. In this way, the workers can query whether the medicine bottle storage rack is empty and where it is, through the position information of the medicine bottle storage rack, so as to facilitate the subsequent storage of the medicine bottles that are put in storage.

In an implementation of the present invention, the movable worktable of the embodiment of the present invention stops moving every time when the movable worktable reaches each of the plurality of medicine bottle storage positions, and moves to a next of the plurality of medicine bottle storage positions after reading the medicine bottle information at the position. The movable worktable stops at each of the plurality of medicine bottle storage positions to improve detection accuracy of the infrared sensor and prevent the detection of the medicine bottle from being missed.

In an implementation of the present invention, before putting the medicine bottles attached with the RFID electronic labels into the medicine bottle storage rack, the method, not being part of the present invention, further includes: reading the coding information and the medicine bottle information in the RFID electronic label on the medicine bottle by the RFID read and write device in advance, and then storing the coding information and the medicine bottle information in the database. In this way, the medicine bottle information can be entered first, and then the position information can be bound by the movement detection of the movable worktable. When a new medicine bottle is added to the medicine bottle storage rack with a vacancy, it is no longer necessary to bind the medicine bottle information and the position information repeatedly for each of the plurality of medicine bottle storage positions of each medicine bottle storage rack, but only bind the medicine bottle with the position information at a missing position.

Step S40, repeating the previous step until the movable worktable has completed all the medicine bottle storage positions on the medicine bottle storage rack.

The RFID-based medicine bottle intelligent control method, not being part of the present invention, binds the medicine bottle information on each of the plurality of medicine bottle storage positions in the medicine bottle storage rack, and the position information of the medicine bottle storage position, and then stores into the database by moving the movable worktable, and the infrared sensor and the RFID read and write device on the movable worktable. In this way, the medicine bottle information and the position information can be automatically and quickly bound and entered without manually entering the position information one by one, so as to improve work efficiency; at the same time, when using the medicine bottle, a storage position of the medicine bottle can be quickly queried through the database, and the worker can quickly extract the medicine bottle. At the same time, because the position corresponds to the medicine bottle information one-to-one, the risk of medical accidents caused by taking the wrong medicine bottle can be avoided.

At the same time, the RFID-based medicine bottle intelligent control method, not being part of the present invention, can improve the storage efficiency of the medicine bottles. For example, the RFID electronic labels of the medicine bottles have been written in advance by medicine bottle suppliers, and then when the hospital purchases the medicine bottles for warehousing, the medicine bottles can be directly put into the medicine bottle storage rack, and then when the movable worktable is used to bind the position with the medicine bottle information, the medicine bottle information can be synchronously read into the database to directly complete the warehousing.

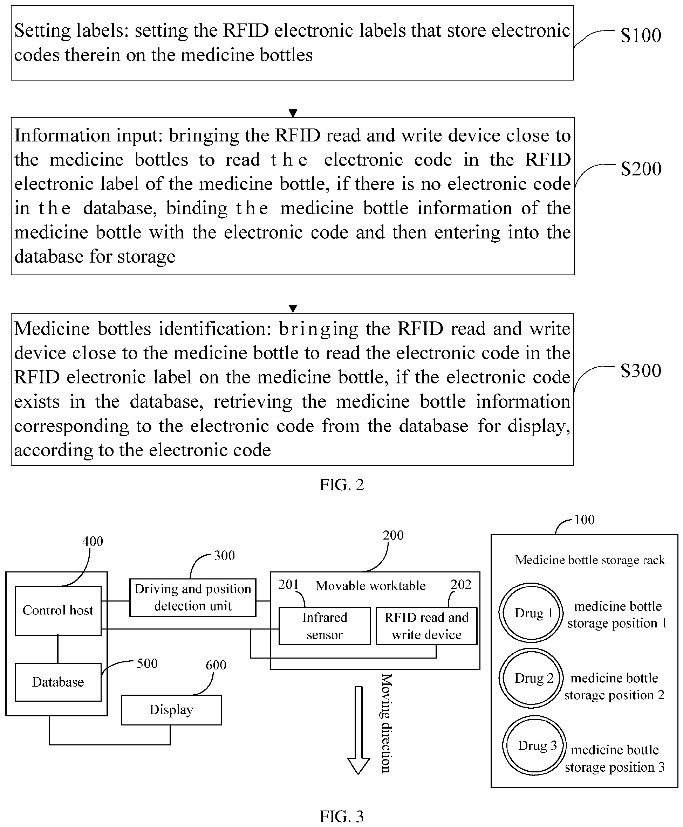

In another embodiment of the present invention, the RFID-based medicine bottle intelligent control method, not being part of the present invention, can also identify the medicine bottle, which is shown in FIG. 2 and specifically includes the following steps:
step S100, setting labels: setting the RFID electronic labels that store electronic codes therein on the medicine bottles.

In an embodiment of the present invention, the electronic code is a unique identification code of the RFID electronic label. The RFID electronic label can be pasted on a bottom or a side of the medicine bottle by using double-sided tape or the like.

step S200, information input: bringing the RFID read and write device close to the medicine bottles to read the electronic code in the RFID electronic label of the medicine bottle, if the electronic code does not exist in the database, binding the medicine bottle information of the medicine bottle with the electronic code and then entering into the database for storage.

In an embodiment of the present invention, information entry is performed a warehousing operation on a newly purchased medicine bottle, after the RFID read and write device is close to the medicine bottle, a start switch can be set to enable reading and writing functions. After reading the electronic code in the RFID electronic label, the RFID read and write device will first query whether the electronic label exists in the database, if not, it is determined that a new medicine bottle is, and the medicine bottle information of the new medicine bottle such as the name, the specification and the production date, etc, will be bound with the electronic code and then stored in the database for subsequent query.

In an implementation of the present invention, the RFID read and write device can be manually moved close to the medicine bottle, or an automatically driving displacement mechanism is provided to drive the RFID read and write device to move the medicine bottle close to the medicine bottle.

Step S300, medicine bottles identification: bringing the RFID read and write device close to the medicine bottle to read the electronic code in the RFID electronic label on the medicine bottle, if the electronic code exists in the database, retrieving the medicine bottle information corresponding to the electronic code from the database for display, according to the electronic code.

After the RFID read and write device in the embodiment of the present invention reads the electronic code in the RFID electronic label, if the electronic label is found in the database, it will be determined to be a stock medicine bottle, and according to the electronic code, the medicine bottle information corresponding to the electronic code will be retrieved from the database for display, and an identification process of the medicine bottle is completed to facilitate subsequent management operations such as inventory and delivery.

The identification process of the medicine bottle in the method, not being part of the present invention, is intelligent, which only brings the RFID read and write device close to the medicine bottle, and then the RFID read and write device turns on the reading function to automatically and quickly complete the identification without manual checking one by one, which improves the work efficiency of the medicine bottle storage management, especially in the inventory process thereof. At the same time, because the RFID electronic label is used, even if the information on the medicine bottle is lost or incomplete during a long-term storage process, specific information of the medicine bottle can still be accurately identified through the RFID electronic label.

Since a RFID wireless communication is adopted between the RFID read and write device and the RFID electronic label, within a certain distance, the RFID read and write device can receive signals transmitted by the RFID electronic label, in this way, it is neither to contact the RFID read and write device with the RFID electronic label, nor to need an optical scanning like barcodes or two-dimensional codes to be aligned between the RFID read and write device with the RFID electronic label, so that the identification method, not being part of the present invention, can perform remote and batch identification on the medicine bottles, and the identification operation process is simpler and more convenient than contact or alignment operations.

In an implementation of the present invention, the medicine bottle information is also stored in the RFID electronic label, and during entering the information, the RFID read and write device directly reads the electronic code and the medicine bottle information in the RFID electronic label and then automatically enters the electronic code and the medicine bottle information in the RFID electronic label, into the database, when the RFID read and write device is close to the medicine bottle. In this way, a warehousing entry of the medicine bottles is fully automated, after the electronic code is automatically obtained during warehousing, there is no need to manually enter the medicine bottle information, instead, the RFID read and write device stores the electronic code and the medicine bottle information into the database to complete the entry, which further improves the work efficiency during the warehousing of the medicine bottles. The medicine bottle information in the RFID electronic label can be written into the RFID electronic label by the medicine bottle supplier through the RFID read and write device in advance.

Based on the above embodiments, the present invention also provides an RFID-based medicine bottle intelligent control apparatus. As shown in FIG. 3,the apparatus uses the above RFID based medicine bottle intelligent control method to complete the positioning of the medicine bottle storage position. The apparatus includes a medicine bottle storage rack 100, a movable worktable 200, a driving and position detection unit 300, a control host 400 and a database 500. The control host 400 and the database 500 of the present invention can be integrated with each other.

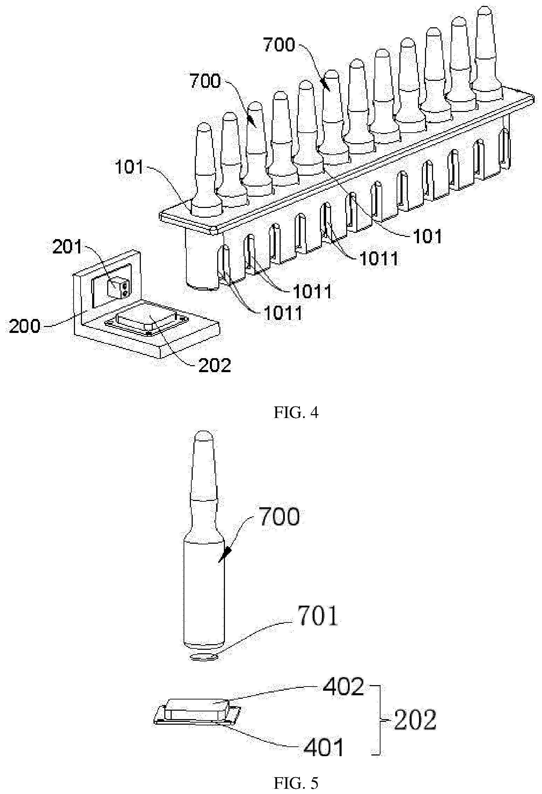

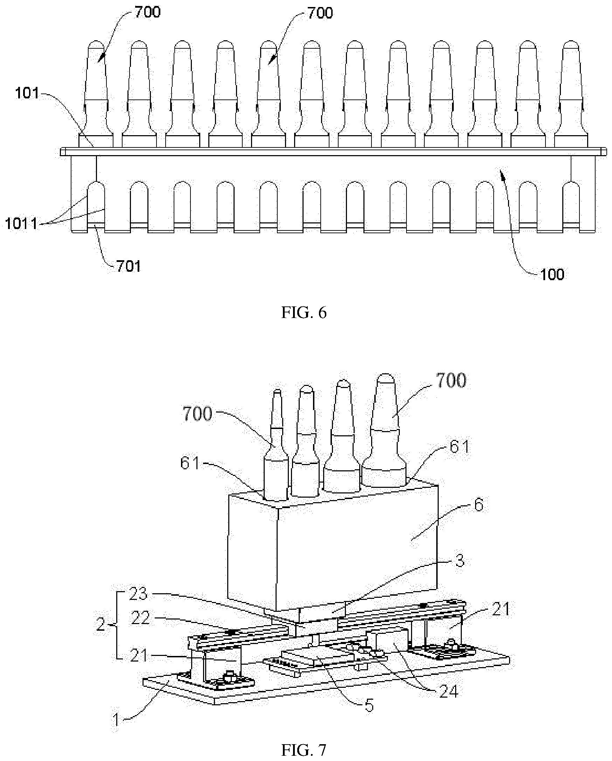

Specifically, as shown in FIG. 6, the medicine bottle storage rack 100 includes a plurality of medicine bottle storage positions 101 axially formed at intervals thereof forplacing medicine bottles700 thereon. The movable worktable200 is configured to move sequentially along an arrangement direction of the medicine bottles 700 on the medicine bottle storage rack 100, both an infrared sensor 201 and an RFID read and write device 202 formed on the movable worktable 200, the infrared sensor 201 configured to transmit and receive infrared rays, and the RFID read and write device 202 configured to read coding information and medicine bottle information in RFID electronic labels 701 on the medicine bottles 700. Referring to FIG. 5, the medicine bottle storage rack 100 of the embodiment is configured to place a plurality of medicine bottles 700 thereof, each medicine bottle 700 is attached with the RFID electronic label 701 that is arranged at the bottom of the medicine bottle 700.

In an implementation of the present invention, the control apparatus further includes a display 600 connected with the control host 400, and the database 500 set in the control host 400.

Specifically, the RFID read and write device 202 in the embodiment of the present invention can be moved on the medicine bottle storage rack 100 to be close to or away from the medicine bottle 700 on the medicine bottle storage rack 100, and the RFID read and write device 202 is wirelessly connected with the RFID electronic label701 on the medicine bottle 700, and obtains the electronic code in the RFID electronic label 701. In an embodiment of the present invention, the RFID read and write device 202 is arranged on the movable worktable 200 that automatically or manually moves on the medicine bottle storage rack 100.

In an embodiment of the present invention, the control host 400 receives the electronic code information fed back by the RFID read and write device 202, and binds the electronic code with the medicine bottle information of the medicine bottle, and then enters into the database 500, or retrieves the medicine bottle information corresponding to the electronic code from the database 500, and then sends to the display screen 600 for display. When the medicine bottle is warehoused, the electronic code in the RFID electronic label 701 of the medicine bottle and the medicine bottle information of the medicine bottle are bound and then input into the database 500. When the medicine bottles are counted or taken out of the warehouse, the medicine bottle information corresponding to the electronic code is retrieved from the database 500 according to the electronic code and then sent to the display screen 600 for display, so as to complete the identification process thereof, and perform subsequent inventory and out-of-warehouse operations.

Specifically, referring to FIG. 5, the RFID read and write device 202 includes an RFID read and write module 401, and an RFID ceramic antenna 402 arranged above the RFID read and write module 401 and connected with the RFID read and write module 401. The RFID ceramic antenna 402 is provided to make the RFID read and write module 401 with a small size and a high sensitivity of reading and writing.

In other embodiments, the RFID read and write device 202 further includes a Bluetooth /WIFI module wirelessly connected with the control host 400. In this way, the RFID read and write device 202 can be free from the connection of the control host 400, and the movable worktable 200 can be very flexible to move freely on the medicine bottle storage rack 100, and easily read the information in the RFID electronic label on the medicine bottle 700, so as to identify the medicine bottle 700.

Specifically, in an implementation of the present invention, the driving and position detection unit 300 is configured to drive the movable worktable200 to move, and detect position parameters of the movable worktable 200. The position parameters are parameters related to position calculations such as a displacement. The driving and position detection unit 300 includes a driving device and a position detection device. The driving device can adopt a structure of a motor plus a transmission part and a walking wheel, or a structure of the motor plus the transmission part and a guiding rail. The position detection device can be an encoder or the like. Of course, the driving device and the position detection device can be integrated with each other.

In an implementation of the present invention, the driving and position detection unit 300 includes a stepping motor configured to drive the movable worktable200 to move and feed back the position parameters of the movable worktable 200. In this way, the displacement of the movable worktable 200 is fed back to the control host 400 through the stepping motor. After calculation, the control host 400 can obtain which medicine bottle storage position 101 that the movable worktable 200is in the medicine bottle storage rack 100, and record the position thereof.

The control host 400 is configured to control the driving and position detection unit 300 to further control the movable worktable 200 to move, and obtain the position information that the movable worktable 200 reaches one of the plurality of medicine bottle storage positions 101; the control host 400 is also configured to receive infrared signals fed back by the infrared sensor 201, the coding information and the medicine bottle information fed back by the RFID read and write device 202, and bind the position information of the medicine bottle with the coding information and the medicine bottle information, and then store in the database 500.

A working principle of the driving and position detection unit 300 of the embodiment of the present invention has been discussed in the above method of positioning the medicine bottle, which will not be repeated here one by one. Since the driving and position detection unit 300 of the embodiment of the present invention combines the infrared sensor 201 and the RFID read and write device 202 to bind the position information and the medicine bottle information of the medicine bottle 700 on the medicine bottle storage rack 100, which can automatically complete the entry of the medicine bottle information and the corresponding position information, and improve the work efficiency thereof; furthermore, the worker can quickly locate a storage position of the medicine bottle through the database, to conveniently extract the medicine bottle, and avoid risks of medical accidents caused by taking the wrong medicine bottle.

Specifically, referring to FIG. 4, a lower part of each of the plurality of medicine bottle storage positions 101 of the medicine bottle storage rack 100 includes a gap 1011 through the front and back to expose a bottom and a side of the medicine bottle 700 in the medicine bottle storage position 101. Referring to FIG. 4, the movable worktable200 is an L-shaped configuration, the infrared sensor201 fixed on a side of the L-shaped movable worktable 201, and the RFID read and write device 202 fixed on a bottom of the L-shaped movable worktable 200; and the RFID electronic label 701 on the medicine bottle 700 arranged at the bottom of the medicine bottle 700.

Because the movable worktable 200 is set as the L-shaped configuration, the infrared sensor 201 and the RFID read and write device 202 are respectively arranged on the side and the bottom of the movable worktable 200. At the same time, in combination with the gap 1011 at the lower part of the medicine bottle storage position 101, the RFID read and write device 202 that is arranged at the bottom of the medicine bottle 700 is configured to read the medicine bottle information, and the infrared sensor 201 transmits and receives the infrared information at the side of the medicine bottle 700, thereby avoiding a mutual interference between the infrared sensor 201 and the RFID read and write device 202.

In an implementation of the present invention, the infrared sensor 201 is a reflective infrared sensor configured to transmit the infrared rays to the medicine bottle 700 and receive the infrared rays reflected by the medicine bottle 700. Comparing with an opposite-type sensor, the reflective infrared sensor can simplify a structural design that the infrared sensor 201 is installed on the movable worktable 200.

In an implementation of the present invention, black covering layers are formed on a bottom surface and a side surface of the medicine bottle storage rack 100. In this way, when the infrared sensor 201 of the movable worktable 200 emits the infrared rays to the medicine bottle storage position 101 of the medicine bottle storage rack 100, an interference caused by reflecting the infrared rays from non-notched positions of the medicine bottle storage rack 100 can be avoided, and the detection accuracy of the infrared sensor 201 can be improved.

According to the present invention, referring to FIGS. 7-9, the medicine bottle storage rack 100 of the present invention further includes: a base 1 including a linear displacement module 2 that provides with a shielding cover 3 with an upper opening thereof, an RFID main antenna 4received in the shielding cover 3, and a main control circuit board 5 with a function of reading and writing RF signals arranged on the base 1 and electrically connected with the RFID main antenna 4.

In an embodiment of the present invention, the linear displacement module 2 is configured to drive the shielding cover 3 and the RFID main antenna 4 to linearly move back and forth, so as to read data in batches. The RFID main antenna 4 is combined with the main control circuit board 5 to cooperatively read the information in the RFID electronic label 701 on the medicine bottle 700. The RFID main antenna 4 is configured to transmit or receive the RF signals, while the main control circuit board 5 is configured to generate the RF signals or decode the RF signals that has been received.

The shielding cover 3 of the embodiment of the present invention is configured to reduce an interference that external environments apply on the RFID main antenna 4. A reading range of the RFID main antenna 4 can be arranged above the RFID main antenna 4, to prevent other nearby medicine information from being misread due to the reading range spreading around.

The main control circuit board 5 with the function of reading and writing radio frequency(RF) signals in the embodiment of the present invention can be completed by a conventional RF chip and a main control MCU. The RF chip performs data encoding and decoding functions, and transmits or receives the RF signals through the RFID main antenna 4. The main control MCU performs data processing after that data is encoded and decoded, and uploads the data of the RFID electronic label 701 to the database. It is understandable that the main control circuit board 5 can include a built-in storage unit to realize the function of the database.

In an implementation of the present invention, the embodiment also includes a host (not shown) electrically connected to the main control circuit board 5, the host including the database for storing the medicine information of the medicine bottle 700. The host is independently set to effectively coordinate and control the RFID-based intelligent medicine bottle control apparatus of the present invention, such as data storage and query, and automatically driving the linear displacement module, etc.

The RFID-based intelligent medicine bottle control apparatus of the embodiment includes a medication box 6 arranged above the shielding cover 3. A plurality of medicine bottle holding holes 61 with upper openings thereof is arranged in the medication box 6, and configured to place the medicine bottle 700 thereon. The RFID electronic label 701 is arranged on the medicine bottle 700, and configured to store corresponding information of the medicine bottle, such as the electronic code, or directly store the information of the medicine to be used.

According to the present invention, a RFID secondary antenna 7 is arranged on a bottom of each medicine bottle holding hole 61 and has the same frequency as the RFID main antenna 4 for relaying signals; a top of the RFID secondary antenna 7 in contact with the bottom of the medicine bottle 700. The RFID secondary antennas 7 in the plurality of medicine bottle holding holes 61 have different heights, so that a height of each medicine bottle 700 exposed out of the medicine bottle holding hole 61 is the same.

In this way, the medicine bottles 700 with different heights can be placed into the medicine bottle holding holes 61 that the RFID secondary antenna 7 with different heights are built in the medicine bottle holding holes 61, so that the heights of all the medicine bottles 700 exposed out of the medication box 6 are the same, which is to easily take the medicine bottle 700.At the same time, since a RFID technology is used in the present invention to read the data in the RFID electronic label 701 of the medicine bottle700 by a non-contact way, it is necessary to ensure that the RF signal is within an acceptable distance thereof. When the medicine bottle 700 is padded up in the medication box 6, a distance between the RFID electronic label 701 on the medicine bottle 700 and the RFID main antenna 4 becomes larger, which can cause the signal to become weak and the RFID electronic label 701 can't be activated. The RFID secondary antenna 7 of the embodiment is provided to solve the problem that the signal becomes weak after the medicine bottle 700 is padded up in the medication box 6. The RFID secondary antenna 7 has the same frequency as the RFID main antenna 4, and energy of the RFID main antenna 4 can be gathered and then transferred to the RFID electronic label 701 through inductive effect to activate the RFID electronic label 701. The RFID secondary antenna 7 plays a role in signal enhancement and centralization in the present invention, and also plays a role in raising the medicine bottle.

In the embodiment of the present invention, since the main control circuit board 5with the function of reading and writing the RF signals, the RFID main antenna 4, the RFID secondary antenna 7 and the RFID electronic label 701 are set, the medicine information of the medicine bottle can be obtained through the RFID technology without manual reading, which greatly improves the work efficiency of the worker. At the same time, the medicine bottle 700 is very easy to be taken after the RFID secondary antenna 7 is padded up in the medication box 6.

In an implementation of the present invention, the RFID electronic label 701 is arranged at the bottom of the medicine bottle 700, and the top of the RFID secondary antenna 7 is in contact with the RFID electronic label 701 at the bottom of the medicine bottle 700. In this way, the RFID secondary antenna 7 is in contact with the RFID electronic label 701 directly, so that the RFID electronic label 701 can easily receive the energy signal of the RFID main antenna 4 that has been moved below the RFID electronic label 701, so as to conveniently read the data.

Furthermore, the RFID main antenna 4 in the embodiment is a block antenna, and the RFID secondary antenna 7 is a column antenna. The RFID main antenna 4 is the block antenna, which can reduce a space occupied by the RFID main antenna 4 on the base 1. The RFID secondary antenna 7 is the column antenna to adapt to the medicine bottle holding hole 61 of the medication box 6, and is convenient to pad up the medicine bottle 700.

It can be understood that the RFID main antenna 4 and the RFID secondary antenna 7 in the embodiment of the present invention are ceramic antennas, PCB antennas or Rogers board antennas.

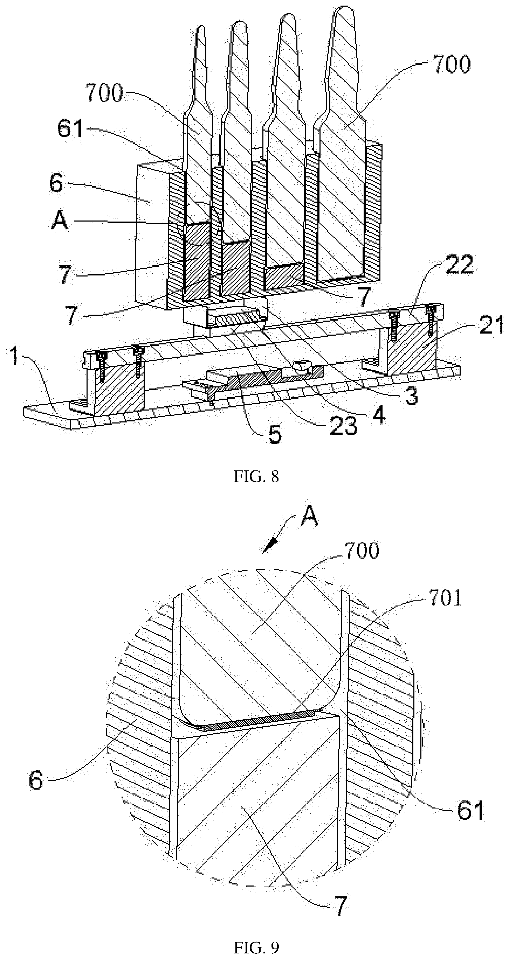

Specifically, referring to FIG. 7 and FIG. 8, the linear displacement module 2 of the present invention further includes a frame 21 protruding on the base 1, a sliding rail 22 fixed on the frame 21, and a sliding block 23 sliding back and forth on the sliding rail 22, and the shielding cover 3 fixed on the sliding block 23 to slide together with the sliding block 23. The sliding rail 22 is fixedly connected with the frame 21 by screws. A linear movement of the sliding block 23 on the sliding rail 22 realizes the movement of the shielding cover 3 and the RFID main antenna 4 that is received in the shielding cover 3, so as to read information of the RFID electronic label 701 at the bottom of the medicine bottle 700 in the medication box 6 in sequence.

In an implementation of the present invention, the linear displacement module 2 further includes a driving device 24 arranged on the base 1 and connected with the sliding block23 by a transmission way, and the driving device 24 is configured to drive the sliding block 23 to move back and forth on the sliding rail 22. The driving device 24 can be formed by a motor and a transmission member, and is electrically connected with the control host 400. The driving device 24 is provided to enable the movement of the sliding block 23 to be automated.

The RFID-based intelligent medicine bottle control apparatus proposed in the embodiment of the present invention can adapt to the medicine bottles with different heights. By setting the linear displacement module 2 and the main control circuit board 5 with the function of reading and writing the RF signals on the base 1, the RFID main antenna 4 is set on the linear displacement module 2, and the RFID secondary antenna 7 with the same frequency as that of the RFID main antenna 4 is set at the bottom of each medicine bottle holding hole 61 of the medication box 6, the plurality of RFID secondary antennas 7 have different heights, so that the height of each medicine bottle 700 exposed out of the medicine bottle holding hole 61 is the same. The RFID secondary antenna 7 is set to not only heighten the medicine bottle, but also relay signal transmission. In this way, on the one hand, the linear displacement module 2 drives the RFID main antenna 4 to move back and forth to read information of the RFID electronic label 701 at the bottom of the medicine bottle 700 in the medication box 6 without needing to read the information manually, which improves the work efficiency thereof; on the other hand, the heights of the medicine bottles 700 exposed out of the medication box 6 are consistent, which is convenient to take the medicine bottle 700.

In summary, the present invention provides an RFID-based intelligent medicine bottle control apparatus. The present invention can improve the intellectualization degree in the process of storing and managing the medicine bottles, automatically input the medicine bottle information and the position information that has been stored, and improve the work efficiency thereof.

Finally, it should be noted that the above embodiments are only used to illustrate the technical solution of the present invention, rather than limiting the present invention in any forms. Although the present invention has been described in detail with reference to the foregoing embodiments, it should be understood by one of ordinary skill in the related art: it can still modify the technical solutions recorded in the above embodiments, or make equivalent replacement for some of the technical features, these modifications or substitutions do not make the essence of the corresponding technical solutions separate from the scope of the technical solutions of the embodiments of the present invention, as defined in the claims.

## Claims

1. A RFID-based intelligent medicine bottle control apparatus comprising: a medicine bottle storage rack (100), a movable worktable (200), a driving and position detection unit (300), a control host (400) and a database (500); wherein the medicine bottle storage rack (100) comprises a plurality of medicine bottle storage positions (101) at intervals along a moving direction thereof for storing medicine bottles (700) therein;
the movable worktable (200) is configured to move sequentially along an arrangement direction of the medicine bottles (700) on the medicine bottle storage rack (100), **characterized in that**, both an infrared sensor (201) and an RFID read and write device (202) are formed on the movable worktable (200), the infrared sensor (201) is configured to transmit and receive infrared rays, and the RFID read and write device (202) is configured to read coding information and medicine bottle information in RFID electronic labels (701) on the medicine bottles (700);
the driving and position detection unit (300) is configured to drive the movable worktable (200) to move, and detect position parameters of the movable worktable (200); and
the control host (400) is configured to control the driving and position detection unit (300) to further control movement of the movable worktable (200), and obtain position information after the movable worktable (200) reaches one of the plurality of medicine bottle storage positions (101), the control host (400) is also configured to receive infrared signals fed back by the infrared sensor (201), the coding information and the medicine bottle information fed back by the RFID read and write device (202), and bind the position information of the medicine bottle (700) with the coding information and the medicine bottle information, and then store in the database (500); and wherein
the control apparatus further comprises a display (600) connected with the control host (400), and the database (500) is set in the control host (400); and wherein
the medicine bottle storage rack (100) further comprises:
a base (1) comprising a linear displacement module (2) that slidably provides with a shielding cover (3) with an upper opening thereof, an RFID main antenna (4) received in the shielding cover (3), and the base (1) further comprising a main control circuit board (5), with a function of reading and writing RF signals, arranged on the base (1), the main control circuit board (5) electrically connected with the RFID main antenna (4); and
a medication box (6) arranged above the shielding cover (3), the plurality of medicine bottle storage positions (101) with a plurality of upper openings thereof are arranged in the medication box (6), and are configured to place the medicine bottles (700) thereon, the RFID electronic labels (701) are arranged on the medicine bottles (700);
a RFID secondary antenna (7) is arranged on a bottom of each of the plurality of medicine bottle storage positions (101) and is having the same frequency as the RFID main antenna (4) for relaying signals; a top of the RFID secondary antenna (7) is in contact with the bottom of the medicine bottle (700),
the RFID secondary antennas (7) in the plurality of medicine bottle storage positions (101) having different heights, so that a height of each medicine bottle (7) exposed out of the medicine bottle storage position (101) is the same; and wherein
the linear displacement module (2) comprises a frame (21) protruding on the base (1), a sliding rail (22) fixed on the frame (21), and a sliding block (23) sliding back and forth on the sliding rail (22), the shielding cover (3) is 2. fixed on the sliding block (23) to slide together with the sliding block (23).

2. The RFID-based intelligent medicine bottle control apparatus as claimed in claim 1, wherein a lower part of each of the plurality of medicine bottle storage positions (101) of the medicine bottle storage rack (100) comprises a gap (1011) through the front and back to expose a bottom and a side of the medicine bottle (700) in the medicine bottle storage position (101);
the movable worktable (200) being an L-shaped configuration, the infrared sensor (201) 2. fixed on a side of the L-shaped movable worktable (200), and the RFID read and write device (202) is fixed on a bottom of the L-shaped movable worktable (200) and
the RFID electronic label (701) on the medicine bottle (700) is arranged at the bottom of the medicine bottle (700).

3. The RFID-based intelligent medicine bottle control apparatus as claimed in claim 1, wherein the infrared sensor (201) is a reflective infrared sensor configured to transmit the infrared rays to the medicine bottle (700) and receive the infrared rays reflected by the medicine bottle (700).

4. The RFID-based intelligent medicine bottle control apparatus as claimed in claim 1, wherein black covering layers are formed on a bottom surface and a side surface of the medicine bottle storage rack (100).

5. The RFID-based intelligent medicine bottle control apparatus as claimed in claim 1, wherein the driving and position detection unit (300) comprises a stepping motor configured to drive the movable worktable (200) to move and feed back the position parameters of the movable worktable (200).

6. The RFID-based intelligent medicine bottle control apparatus as claimed in claim 1, wherein the RFID read and write device (202) comprises an RFID read and write module (401), and an RFID ceramic antenna (402) connected with the RFID read and write module (401) and arranged above the RFID read and write module (401); the RFID read and write device (202) is arranged on the movable worktable (200) that automatically or manually moves on the medicine bottle storage rack (100).

7. The RFID-based intelligent medicine bottle control apparatus as claimed in claim 1, wherein the RFID read and write device (202) further comprises a Bluetooth /WIFI module wirelessly connected with the control host (400).

8. The RFID-based intelligent medicine bottle control apparatus as claimed in claim 1, wherein
the RFID electronic label (701) is arranged at the bottom of the medicine bottle (700), and
the top of the RFID secondary antenna (7) is in contact with the RFID electronic label (701) at the bottom of the medicine bottle (700).

9. The RFID-based intelligent medicine bottle control apparatus as claimed in claim 1, wherein both the RFID main antenna (4) and the RFID secondary antenna (7) are selected from one of a ceramic antenna, a PCB antenna and a Rogers board antenna.

10. The RFID-based intelligent medicine bottle control apparatus as claimed in claim 1, wherein the linear displacement module (2) further comprises a driving device (24) arranged on the base (1) and connected with the sliding block (23) in a transmission way, and the driving device (24) is configured to drive the sliding block (23) to move back and forth on the sliding rail (22).

## Patentansprüche

1. Ein intelligenter Medizinflaschenkontrollapparat basierend auf RFID, der Folgendes umfasst: ein Lagerungsgestell (100) für Medizinflaschen, einen bewegbaren Arbeitstisch (200), eine Antriebs- und Positionserfassungseinheit (300), einen Kontroll-Host (400) und eine Datenbank (500); wobei
das Lagerungsgestell (100) für Medizinflaschen vielzähliger Lagerungspositionen für Medizinflaschen (101) in Abständen längs einer entsprechenden Bewegungsrichtung für die Lagerung von Medizinflaschen (700) darin umfasst;
wobei der bewegbare Arbeitstisch (200) konfiguriert ist, um sich sequentiell längs einer Anordnungsrichtung der Medizinflaschen (700) im Lagerungsgestell (100) für Medizinflaschen zu bewegen, **dadurch gekennzeichnet, dass** sowohl ein Infrarotsensor (201) als auch eine RFID-Lese- und Schreibvorrichtung (202) am bewegbaren Arbeitstisch (200) geformt sind, der Infrarotsensor (201) konfiguriert ist, um Infrarotstrahlen zu senden und empfangen und die RFID-Lese- und Schreibvorrchtung (202) konfiguriert ist, um Codierungsinformation und Medizinflascheninformation in den elektronischen RFID-Etiketten (701) an den Medizinflaschen (700) zu lesen; wobei die Antriebs- und Positionserfassungeinheit (300) konfiguriert ist, um den zu fortzubewegenden, bewegbaren Arbeitstisch (200) anzutreiben und Positionsparameter des bewegbaren Arbeitstisches (200) zu erfassen; und wobei der Kontroll-Host (400) konfiguriert ist, um die Antriebs- und Positionserfassungeinheit (300) zu steuern, um weiter die Bewegung des bewegbaren Arbeitstisches (200) zu steuern und Positionsinformatio zu erhalten, nachdem der bewegbare Arbeitstisch (200) eine der vielzähligen Lagerungspositionen (101) der Medizinflaschen erreicht hat, wobei der Kontroll-Host (400) auch konfiguriert ist, um das rückgeführte Infrarotsignal durch den Infrarotsensor (201), zu empfangen, die curch die RFID-Lese- und Schreibvorrichtung (202) zurückgeführte Codierungsinformation und Information der Medizinflasche zu empfangen und die Positionsinformation der Medizinflasche (700) mit der Codierungsinformation und der Medizinflascheninformation zu verbinden und dan in der Datenbank (500) zu speichern; und wobei
Der Kontrollapparat ausserdem eine optische Anzeige (600) umfasst, die mit dem Kontroll-Host (400) und der im Kontroll-Host eingerichteten Datenbank (500) verbunden ist und wobei das Lagerungsgestell (100) für Medizinflaschen weiter Folgendes umfasst:
Eine Grundfläche (1), die ein Modul (2) für lineare Verschiebung umfasst, das gleitbar eine Schutzabdeckung (3) bereitstellt, mit einer oberen Öffnung in derselben, wobei eine RFID-Hauptantenne (4) in der Schutzabdeckung (3) aufgenommen ist, und die Grundfläche (1) weiter eine Hauptkontrollleiterplatte (5) umfasst mit einer Lese- und Schreibfunktion von RF-Signalen, die an der Grundfläche (1) angeordnet ist, wobei die Hauptkontrollleiterplatte (5) elektrisch mit der RFID-Hauptantenne (4) verbunden ist, und mit einem Medikationskasten (6), der über der Schutzabdeckung (3) angeordnet ist, wobei die vielzähliegen Lagerungspositionen (101) für Medizinflaschen mit vielzähligen oberen Öffnungen derselben im Medikationskasten (16) angeordnet sind, und die konfiguriert sind, um die Medizinflaschen (700) darin einzuordnen, wobei die elektronischen RFID-Etiketten (701) an den Medizinflaschen (700) angeordnet sind; eine RFID sekundäre Antenne (7) am Boden aller der vielzähligen Lagerungspositionen(101) für Medizinflaschen angeordnet ist und mit derselben Frequenz wie die RFID-Hauptantenne (4) für Weiterleitungssignale; wobei eine Spitze der sekundären RFID-Antenne (7) mit dem Boden der Medizinflasche (700) im Kontakt steht, die sekundären RFID-Antennen (7) in den vielzähligen Lagerungspositionen (101) für Medizinflaschen verschiedene Höhen aufweisen, so dass eine Höhe einer jeden Medizinflasche (7) ausserhalb der Lagerungsposition (101) für Medizinflaschen freiliegend dieselbe ist; und wobei
das lineare Verschiebungsmodul (2) einen an der Grundfläche (1) hervorragenden Rahmen, eine am Rahmen befestigte Gleitschiene (22) und einen Gleitblock (23) umfasst, der hin- und zurück auf der Gleitschiene (22) gleitet, wobei damit die am Gleitblock (23) befestigte Schutzabdeckung (3) zusammen mit dem Gleitblock (23) gleitet.

2. Der intelligente Medizinflaschenkontrollapparat basierend auf RFID gemäss Anspruch 1, bei dem ein unterer Teil einer jeden dier vielzähligen Lagerungspositionen (101) für Medizinflaschen des Lagerungsgestells (100) für Medizinflaschen einen Spalt (1011) aufweist, der durch die Vorder- und Rückseite geht, um einen Boden und eine Seite der Medizinflasche (700) in der Lagerungsposition (101) für Medizinflaschen freizulegen, wobei der bewegbare Arbeitstisch (200) eine L-förmige Konfiguration aufweist, der Infrarrotsensor (201) an einer Seite des L-förmigen, bewegbaren Arbeibtstisches (200) befestigt ist und die RFID-Lese- und Schreibvorrichtung (202) am Boden des L-förmigen, bewegbaren Arbeitstisches (200) befestigt ist; und wobei das elektronische RFID-Etikett (701) an der Medizinflasche (700) am Boden der Medizinflasche (700) angeordnet ist.

3. Der intelligente Medizinflaschenkontrollapparat basierend auf RFID gemäss Anspruch 1, bei dem der Infrarotsensor (201) ein reflektierender Infrarotsensor ist, der konfiguriert ist, um die Infrarotstrahlen an die Medizinflasche (700) weiterzuleiten und die durch die Medizinflasche (700) reflektierten Strahlen zu empfangen.

4. Der intelligente Medizinflaschenkontrollapparat basierend auf RFID gemäss Anspruch 1, bei dem an einer Bodenfläche und einer Seitenfläche des Lagerungsgestells (100) für Medizinflaschen schwarze Deckschichten gebildet werden.

5. Der intelligente Medizinflaschenkontrollapparat basierend auf RFID gemäss Anspruch 1, bei dem die Antriebs- und Positionserfassungseinheit (300) einen Schrittmotor umfasst, der für den Antrieb des bewegbaren Arbeitstisches (200) konfiguriert ist, zwecks Bewegung und Feedback der Positionsparameter des Arbeitstisches (200).

6. Der intelligente Medizinflaschenkontrollapparat basierend auf RFID gemäss Anspruch 1, bei dem die RFID.Lese- und Schreibvorrichrung ein RFID-Lese- und Schreibmodul (401) umfasst sowie eine RFID-Keramikantenne (402), die mit dem RFID-Lese- und Schreibmodul (401) verbunden und über dem RFID-Lese-und Schreibmodul (401) angeordnet ist; wobei die RFID-Lese- und Schreibvorrichung (201) am bewegbaren Arbeitstisch (200) angeordnet ist, der sich automatisch oder manuell am Lagerungsgestell (100) für Medizinflaschen fortbewegt.

7. Der intelligente Medizinflaschenkontrollapparat basierend auf RFID gemäss Anspruch 1, bei dem die RFID-Lese- und Schreibvorrichtung (202) weiter ein Bluetooth/WILAN-Modul umfasst, das drahtlos mit dem Kontroll-Host (400) verbunden ist.

8. Der intelligente Medizinflaschenkontrollapparat basierend auf RFID gemäss Anspruch 1, bei dem das elektronische RFID-Etikett (701) am Boden der Medizinflasche (700) angeordnet ist und die Spitze der sekundären RFID-Antenne (7) mit dem elektronischen RFID-Etikett (701) am Boden der Medizinflasche (700) im Kontakt steht.

9. Der intelligente Medizinflaschenkontrollapparat basierend auf RFID gemäss Anspruch 1, bei dem sowohl die RFID-Hauptantenne als auch die sekundäre RFID-Antenne (7) ausgewählt werden aus Folgenden: eine Keramikantenne, eine PCB-Antenne und eine Rogers Patchantenne.

10. Der intelligente Medizinflaschenkontrollapparat basierend auf RFID gemäss Anspruch 1, bei dem das lineare Verschiebungsmodul (2) weiter eine Antriebsvorrichtung (24) umfasst, die an der Grundfläche (1) angeordnet und mit dem Gleitblock (23) in Übertragunsweise verbunden ist, und die Antriebsvorrichtung für den Antrieb des Gleitblocks (23) für die Fortbewegung hin und zurück auf den Gleitschienen (22) konfiguriert ist,

## Revendications

1. Un appareil intelligent de contrôle des flacons de médicaments basé sur la RFID comprenant : un rack de stockage des flacons de médicaments (100), une table de travail mobile (200), une unité de commande et de détection de la position (300), un hôte de contrôle (400) et une base de données (500) ; dans lequel le rack de stockage des flacons de médicaments (100) comprend une pluralité de positions de stockage des flacons de médicaments (101) à intervalles répartis le long d'une direction de déplacement des dits flacons, pour le stockage des flacons de médicaments (700) à l'intérieur de ceux-ci ; dans lequel
la table de travail mobile (200) est configurée pour se déplacer séquentiellement le long d'une direction de positionnement des flacons de médicaments (700) sur le rack de stockage de flacons de médicaments (100), **caractérisée en ce que** tant un détecteur infrarouge (201) qu'un dispositif de lecture et d'écriture RFID (202) sont formés sur la table de travail mobile (200), le détecteur infrarouge (201) étant configuré pour transmettre et recevoir des rayons infrarouges, et le dispositif de lecture et d'écriture RFID (202) étant configuré pour lire les informations de codification et les informations concernant les flacons de médicaments dans les étiquettes électroniques RFID (701) apposées sur les flacons de médicaments (700) ; l'unité de commande et de détection de position (300) est configurée pour commander le déplacement de la table de travail mobile (200) et pour détecter les paramètres de position de la table de travail mobile (200) ; et l'hôte de contrôle (400) est configuré pour contrôler l'unité de commande et de détection de position (300) afin de contrôler également le déplacement de la table de travail mobile (200) et d'obtenir des informations sur la position une fois que la table de travail mobile (200) a atteint l'une des positions de la pluralité de positions de stockage de flacons de médicaments (101), l'hôte de contrôle (400) est également configuré pour recevoir les signaux infrarouges renvoyés par le détecteur infrarouge (201), les informations de codification et les informations concernant le flacon de médicaments retournées par le dispositif de lecture et d'écriture RFID (202), et combiner les informations sur la position du flacon de médicaments (700) avec les informations de codification et les informations concernant le flacon de médicaments, pour ensuite les enregistrer dans la base de données (500) ; et dans lequel l'appareil de commande comprend en outre un écran (600) relié à l'hôte de commande (400), et la base de données (500) est définie dans l'hôte de commande (400) ; et dans lequel le rack de stockage de flacons de médicaments (100) comprend en outre :
une base (1) comprenant un module de déplacement linéaire (2) qui fournit de manière coulissante un couvercle de protection (3) avec une ouverture supérieure, une antenne principale RFID (4) étant logée dans le couvercle de protection (3), òu la base (1) comprend en outre une carte de circuit imprimé de commande principale (5), avec une fonction de lecture et d'écriture de signaux RF, disposée sur la base (1), la carte de circuit imprimé de commande principale (5) étant connectée électriquement à l'antenne principale RFID (4) ; et
une boîte pour l'administration des médicaments (6), disposée au-dessus du couvercle de protection (3), dans laquelle une pluralité d'ouvertures supérieures sont disposées dans la boîte pour l'administration des médicaments (6), et qui est configurée pour y placer les flacons de médicaments (700), les étiquettes électroniques RFID (701) étant disposées sur les flacons de médicaments (700) ; une antenne secondaire RFID (7) est disposée sur le fond de chacune des multiples positions de stockage des flacons de médicaments (101) et fonctionne à la même fréquence que l'antenne principale RFID (4) pour relayer les signaux ; le point supérieur de l'antenne secondaire RFID (7) est en contact avec le fond du flacon de médicaments (700),
les antennes secondaires RFID (7) situées dans la pluralité de positions de stockage de flacons de médicaments (101) ont des hauteurs différentes, de sorte que la hauteur de chaque flacon de médicaments (7) exposé hors de la position de stockage du flacon de médicaments (101) est la même ; et le module de déplacement linéaire (2) comprend un cadre (21) faisant saillie sur la base (1), un rail coulissant (22) fixé sur le cadre (21) et un bloc coulissant (23) qui glisse en va-et-vient sur le rail coulissant (22), le couvercle de blindage (3) étant fixé sur le bloc coulissant (23) pour glisser avec le bloc coulissant (23).

2. L'appareil intelligent de contrôle des flacons de médicaments basé sur la RFID selon la revendication 1, dans lequel une partie inférieure de chacune des multiples positions de stockage de flacons de médicaments (101) du rack de stockage de flacons de médicaments (100) comprend un espace (1011) à travers l'avant et l'arrière pour exposer un fond et un côté du flacon de médicaments (700) dans la position de stockage des flacons de médicaments (101) ; la table de travail mobile (200) a une configuration en forme de L, le détecteur infrarouge (201) est fixé sur un côté de la table de travail mobile en forme de L (200), et le dispositif de lecture et d'écriture RFID (202) est fixé sur un fond de la table de travail mobile en forme de L (200) ; et l'étiquette électronique RFID (701) apposée sur le flacon de médicaments (700) est disposée sur le fond du flacon de médicaments (700).

3. L'appareil intelligent de contrôle des flacons de médicaments basé sur la RFID selon la revendication 1, dans lequel le détecteur infrarouge (201) est un détecteur infrarouge réfléchissant configuré pour transmettre les rayons infrarouges au flacon de médicaments (700) et recevoir les rayons infrarouges réfléchis par le flacon de médicaments (700).

4. L'appareil intelligent de contrôle des flacons de médicaments basé sur la RFID selon la revendication 1, dans lequel des couches de recouvrement noires sont formées sur une surface inférieure et une surface latérale du rack de stockage de flacons de médicaments (100).

5. L'appareil intelligent de contrôle de flacon de médicaments basé sur la RFID selon la revendication 1, dans lequel l'unité de commande et de détection de position (300) comprend un moteur pas à pas configuré pour commander la table de travail mobile (200) afin de la déplacer et de renvoyer les paramètres de position de la table de travail mobile (200).

6. L'appareil intelligent de contrôle des flacons de médicaments basé sur la RFID selon la revendication 1, dans lequel le dispositif de lecture et d'écriture RFID (202) comprend un module de lecture et d'écriture RFID (401) et une antenne céramique RFID (402) connectée au module de lecture et d'écriture RFID (401) et disposée au-dessus du module de lecture et d'écriture RFID (401) ; le dispositif de lecture et d'écriture RFID (202) est disposé sur la table de travail mobile (200) qui se déplace automatiquement ou manuellement sur le rack de stockage des flacons de médicaments (100).

7. L'appareil de contrôle intelligent des flacons de médicaments basé sur la RFID selon la revendication 1, dans lequel le dispositif de lecture et d'écriture RFID (202) comprend en outre un module Bluetooth /WIFI connecté sans fil à l'hôte de contrôle (400).

8. L'appareil intelligent de contrôle des flacons de médicaments basé sur la RFID selon la revendication 1, dans lequel l'étiquette électronique RFID (701) est disposée au fond du flacon de médicaments (700), et le point supérieur de l'antenne secondaire RFID (7) est en contact avec l'étiquette électronique RFID (701) située au fond du flacon de médicaments (700).

9. L'appareil intelligent de contrôle des flacons de médicaments basé sur la RFID selon la revendication 1, dans lequel l'antenne principale RFID (4) et l'antenne secondaire RFID (7) sont choisies parmi une antenne céramique, une antenne PCB et une antenne de patch Rogers.

10. L'appareil intelligent de contrôle des flacons de médicaments basé sur la RFID selon la revendication 1, dans lequel le module de déplacement linéaire (2) comprend en outre un dispositif de commande (24) disposé sur la base (1) et connecté au bloc coulissant (23) dans une voie de transmission, et le dispositif de commande (24) est configuré pour commander le bloc coulissant (23) pour se déplacer d'avant en arrière sur le rail de glissement (22).
